# EUROPÄISCHE PATENTSCHRIFT

(11) **EP 1 483 274 B1**
(45) Veröffentlichungstag und Bekanntmachung des Hinweises auf die Patenterteilung: **08.06.2005**
(21) Anmeldenummer: 02792822.5
(22) Anmeldetag: 28.11.2002
(51) Int. Cl.: C07F 9/6574

(54) **VERBESSERTES VERFAHREN ZUR HERSTELLUNG VON BISPHOSPHITEN**
IMPROVED METHOD FOR THE PRODUCTION OF BISPHOSPHITES
PROCEDE AMELIORE DE PRODUCTION DE BIPHOSPHITES

(30) Priorität: 13.03.2002 DE 10210918
(43) Veröffentlichungstag der Anmeldung: 08.12.2004
(73) Patentinhaber: Oxeno Olefinchemie GmbH, 45772 Marl (DE)
(72) Erfinder: BORGMANN, Cornelia, Dr., 45657 Recklinghausen (DE)
(74) Vertreter: Lang, Arne, Dr.
(86) Internationale Anmeldenummer: PCT/EP2002/013418
(87) Internationale Veröffentlichungsnummer: WO 2003/076448

(56) Entgegenhaltungen:
- EP-A- 1 201 675
- WO-A-99/06416
- GB-A- 1 107 220
- SELENT D ET AL: "NEW PHOSPHORUS LIGANDS FOR THE RHODIUM-CATALYZED ISOMERIZATION/HYDROFORMYLATION OF INTERNAL OCTENES" ANGEWANDTE CHEMIE. INTERNATIONAL EDITION, VERLAG CHEMIE. WEINHEIM, DE, Bd. 40, Nr. 9, 4. Mai 2001 (2001-05-04), Seiten 1696-1698, XP002234378 ISSN: 0570-0833 & ANGEW. CHEM. INT. ED. SUPPORTING INFORMATION SHEETS 1-9, [Online] Gefunden im Internet: <URL:http://www.wiley_vch.de/contents/jc_2 002/2001/z16163_s.pdf> [gefunden am 2003-03-12]

## Beschreibung

Die vorliegende Erfindung betrifft ein verbessertes Verfahren zur Herstellung von Bisphosphiten, die Dioxaphosphorinon-Bausteine enthalten.

Phosphite finden vielseitige Anwendungen in unterschiedlichen Bereichen. Von industrieller Bedeutung ist vor allem ihre Verwendung als Antioxidantien, als Hitzestabilisatoren in Polymeren wie PVC (= Polyvinylchlorid) und insbesondere als Liganden für Übergangsmetall-Katalysatoren.

Eine Übersicht zu den wichtigen Homogenkatalysatoren mit Phosphit-Liganden findet man beispielsweise in B. Comils, W. A. Herrmann, Applied Homogeneous Catalysis with Organometallic Compounds Vol. 1 & 2, VCH, Weinheim, 1996, Seiten 29-187, 465-486.

Von den homogenkatalysierten Reaktionen wurden die Hydrocyanierung und insbesondere Carbonylierungsreaktionen wie die Hydroformylierung nachhaltig durch Phosphit-Liganden beeinflusst. Eine Zusammenfassung über Rhodium-katalysierte Hydroformylierungen mit Phosphit-Liganden ist in P.W.N.M. van Leeuwen, C. Claver, Catalysis by Metal Complexes, Vol. 22 Rhodium Catalyzed Hydroformylation, Kluwer Academic Publishers, Dordrecht, 2000, Seiten 35-62, 107-130, 145-188, 233-252, 253-280, abgefaßt worden.

Innerhalb der Gruppe der Phosphite sind chelatisierende Phosphite, insbesondere Bisphosphite, als Liganden für Metallkomplexe von besonderer Bedeutung. Dies beruht darauf, dass Bisphosphite stabilere Komplexe mit dem entsprechenden Zentralmetallatom eingehen und dadurch dessen katalytische Eigenschaften langanhaltender mitbestimmen.

In DE 100 53 272.1 werden Bisphosphite mit Dioxaphosphorinon-Bausteinen beschrieben. In der dort beschriebenen Synthese werden Hydroxy-Verbindungen in Gegenwart der starken Base Butyllithium mit Phosphortrichlorid umgesetzt. Aufgrund des Gefährdungspotentials der Selbstendzündlichkeit von Butyllithium an der Luft, sind besondere und aufwendige Maßnahmen bei dessen Handhabung erforderlich.
In BE 667 036 (Farbwerke Hoechst AG, 1966) wird der Baustein 2-Chlor-1,3-dioxa-2-phospha-anthracen-4-on durch Umsetzung von 2-Hydroxynaphthalin-1-carbonsäure mit Phosphortrichlorid erhalten. Das entstehende Chlorwasserstoffgas wird durch Erhitzen unter Rückfluss aus dem Reaktionsgemisch ausgetrieben. In einer zweiten Variante wird durch Zugabe von wässriger Natronlauge aus 2-Hydroxynaphtalin-1-carbonsäure zunächst das Dinatriumsalz erhalten, anschließend wird das Wasser durch eine azeotrope Destillation entfernt und schließlich das Dinatriumsalz mit Phosphortrichlorid umgesetzt. Die Nachteile bei diesem Verfahren sind zum einen das Erzeugen des korrosiven Gases Chlorwasserstoff und zum anderen das aufwendige Entfernen von Wasser.

Selent et al., Angew. Chem. Int. Ed. 2001, 40, No. 9, S. 1696-1698 offenbaren die Herstellung von Verbindungen der allg. Formel (I) in THF als Losungsmittel.

Die Verwendung der Phosphite in großtechnischen Prozessen, z. B. als Ligand bei der Metallkatalysierten Hydroformylierung von Olefinen, macht es erforderlich, diese Verbindungen in ebenfalls großtechnischen Mengen herzustellen.

Es bestand daher der Bedarf, die bekannten Synthesen von Bisphosphite mit Dioxaphosphorinon-Bausteinen dahingehend zu verbessern, dass sie sicher und einfacher auszuführen und für einen großtechnischen Prozess anwendbar werden.

Die vorliegende Erfindung betrifft daher ein Verfahren zur Herstellung von Bisphosphiten der Formel **I**: 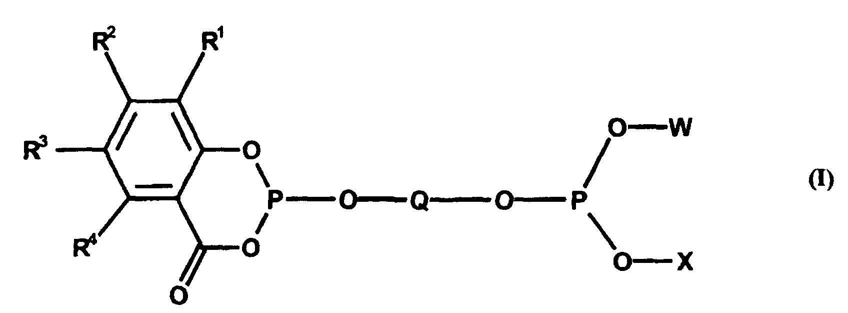 mit R¹, R², R³, R⁴ = H, aliphatischer, alicyclischer, aliphatisch-alicyclischer, heterocyclischer, aliphatisch-heterocyclischer, aromatischer, aromatisch-aromatischer, aliphatisch-aromatischer Kohlenwasserstoffrest mit 1 bis 50 Kohlenstoffatomen, F, Cl, Br, I, -CF₃, -OR⁷, -COR⁷, -CO₂R⁷, -CO₂M, -SR⁷, -SO₂R⁷, -SOR⁷, -SO₃R⁷, -SO₃M, -SO₂NR⁷R⁸, NR⁷R⁸, N=CR⁷R⁸, NH₂, wobei R¹ bis R⁴ eine gleiche oder unterschiedliche Bedeutung besitzen und kovalent miteinander verknüpft sein können,
R⁷, R⁸ = H, substituierter oder unsubstituierter, aliphatischer oder aromatischer Kohlenwasserstoffrest mit 1 bis 25 Kohlenstoffatomen, mit gleicher oder unterschiedlicher Bedeutung,
M = Alkalimetall-, Erdalkalimetall-, Ammonium-, Phosphoniumion
Q = zweiwertiger aliphatischer, alicyclischer, aliphatisch-alicyclischer, heterocyclischer, aliphatisch-heterocyclischer, aromatischer, aliphatisch-aromatischer Kohlenwasserstoffrest mit 1 bis 50 Kohlenstoffatomen,
Z, Y = Cl, Br, I
W, X = aliphatische, alicyclische, aliphatisch-alicyclische, heterocyclische, aliphatisch-heterocyclische, aromatische, aromatisch-aromatische, aliphatisch-aromatische Kohlenwasserstoffreste mit 1 bis 50 Kohlenstoffatomen, die gleich oder unterschiedlich oder kovalent miteinander verknüpft sein können, wobei die Reaktionssequenz 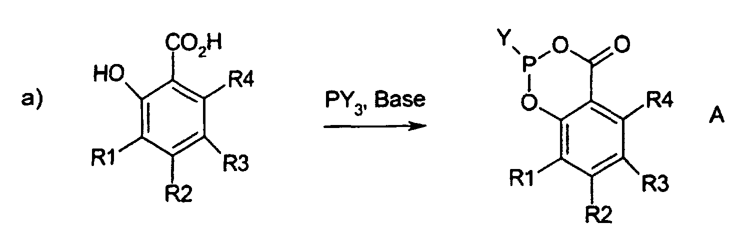 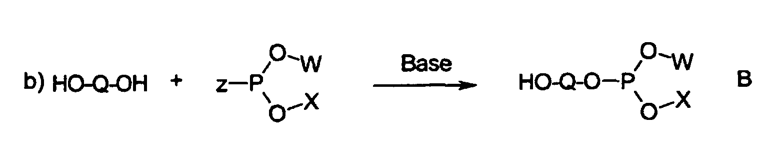 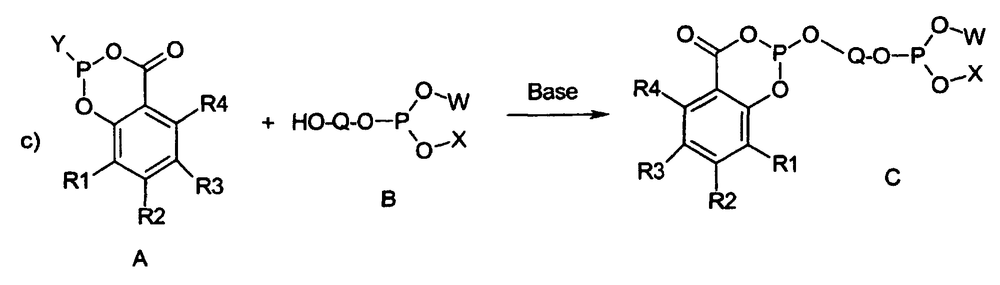 durchgeführt wird,
und die Reaktionsschritte a), b) und c) in aprotischen und unpolaren Lösungsmitteln durchgeführt werden.

Eine Aufarbeitung der Produkte nach den Reaktionsschritten a) - d) ist nicht erforderlich, es ist ausreichend, die ausgefallenen Feststoffe (Säure-Base-Addukt) abzufiltrieren und die so erhaltene Mischung ohne weitere Reinigung im folgenden Reaktionsschritt einzusetzen. Das erfindungsgemäße Verfahren kann daher diskontinuierlich oder kontinuierlich, z. B. in einer Rührkesselkaskade mit entsprechenden Filtereinrichtungen durchgeführt werden.

In den verwendeten aprotischen Lösemitteln wie z. B. Toluol sind die Halogenwasserstoff Basen-Produkte unlöslich und fallen als Feststoffan bzw. im Idealfall aus der Lösung aus.

Das aprotische Lösungsmittel sollte so gewählt werden, das außer dem Säure-Base-Addukt alle Produkte und Edukte in diesem Lösungsmittel löslich sind. Es ist jedoch möglich, dass auch die Zwischenprodukte A und/oder B nur schlecht löslich sind; diese Zwischenprodukte werden jedoch im Laufe der Reaktion in ein bevorzugtes gut lösliches Endprodukt umgesetzt.

Der Vorteil bei dieser Verfahrensweise ist, dass das unlösliche Halogenwasserstoff-Basen-Produkt durch einfache Filtration aus dem Reaktionsgemisch entfernt werden kann, wobei das Zwischenprodukt-enthaltende Filtrat ohne Isolierung unverändert für die nächste Stufe eingesetzt werden kann. Im einfachsten Fall des Verfahrens muss erst das Endprodukt isoliert und gereinigt werden. Da im Vergleich zur eigentlichen Reaktion die Schritte der Isolierung und Reinigung einen größeren Zeitraum beanspruchen, kann bei dieser Verfahrensweise Zeit und somit Kosten gespart werden.

Als Base werden in Verfahren gemäß der Erfindung bevorzugt tertiäre Amine wie Tri-n-propylamin, Diisopropylisobutylamin, N-Cyclohexyldimethylamine, N-Methylmorpholin, N-Methylpiperidin, N-Methylpyrrolidin, N,N,N,N-Tetramethylethylendiamin, DBU (1,8-Diazabicyclo[5.4.0]undecen-7), DBN (1,5-Diazabicyclo[4.3.9]non-5-en, bevorzugt Triethylamin eingesetzt.

Bevorzugte Lösungsmittel sind Benzol, Toluol, Ethylbenzol, Xylol, Cyclohexan.

Das erfindungsgemäße Verfahren umfasst auch die Herstellung von Verbindungen, bei denen zwei der Reste R¹ bis R⁴ in Formel **I** benzanneliert sind, d. h. jeweils R¹ und R², R² und R³ oder R³ und R⁴ können über einen aromatischen Ring miteinander verknüpft sein. Es sind somit drei Isomere realisierbar, die auch als Ligandensystem getrennt oder miteinander verwendet werden können. Die erfindungsgemäß hergestellten Bisphosphite der Formel **I** können daher auch Verbindungen gemäß den Formeln **II**, **III** und **IV** sein.

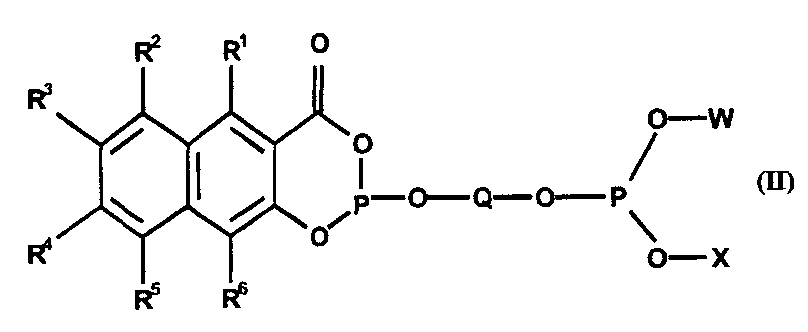

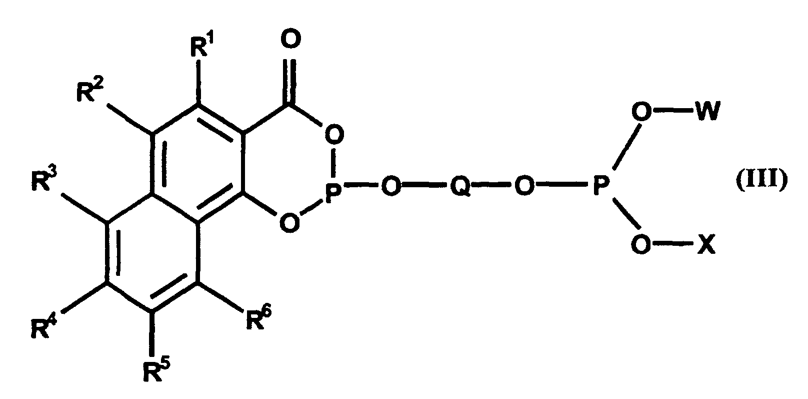

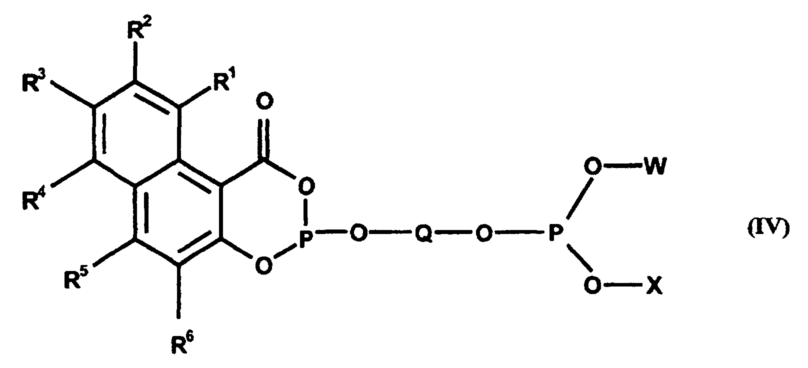

Die Bedeutungen der Reste R¹ bis R⁶ entsprechen denen der für Formel **I** definierten Bedeutungen für R¹ bis R⁴. Es ist möglich, dass diese Reste wiederum eine kovalente Verknüpfung miteinander aufweisen bzw. benzanneliert sind.

Mit den erfindungsgemäßen Verfahren können auch Bisphosphite der Formeln **V, VI** und **VII** hergestellt werden. 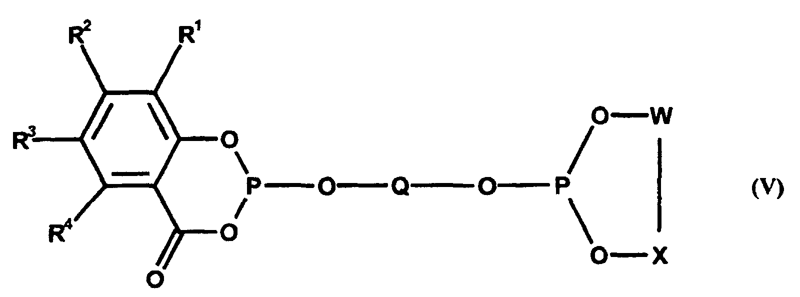 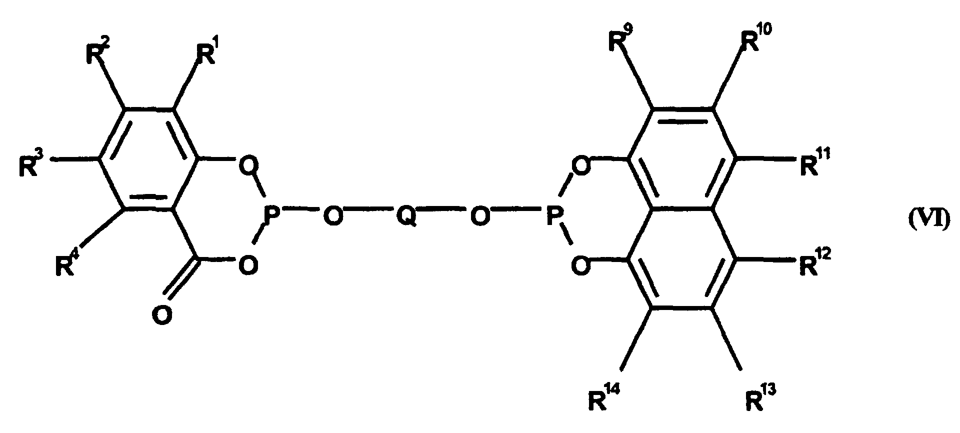 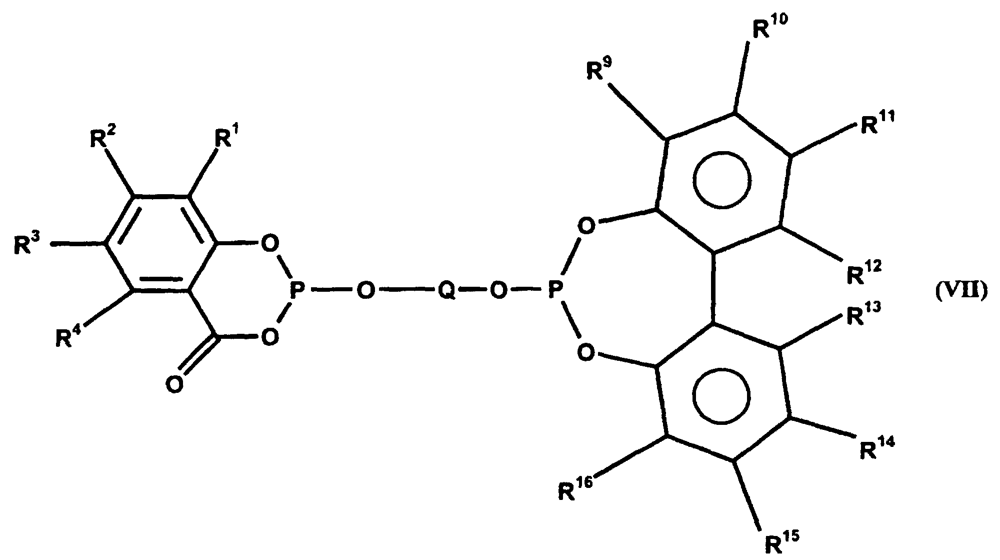 wobei W und X aliphatische, alicyclische, aliphatisch-alicyclische, heterocyclische, aliphatisch-heterocyclische, aromatische, aromatisch-aromatische, aliphatisch-aromatische Kohlenwasserstoffreste mit 1 bis 50 Kohlenstoffatomen bedeuten, X und W gleich oder unterschiedlich oder kovalent mit einander verknüpft sein können
und R¹, R², R³, R⁴, R⁵, R⁶, R⁷, R⁸ und Q die bereits genannten Bedeutungen besitzen.
R⁹, R¹⁰, R¹¹, R¹², R¹³, R¹⁴, R¹⁵, R¹⁶ stehen für H, aliphatischer, alicyclischer, aliphatisch-alicyclischer, heterocyclischer, aliphatisch-heterocyclischer, aromatischer, aromatisch-aromatischer, aliphatisch-aromatischer Kohlenwasserstoffrest mit 1 bis 50 Kohlenstoff-atomen, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, wobei R⁹ bis R¹⁶ eine gleiche oder unterschiedliche Bedeutung besitzen und kovalent miteinander verknüpft sein können.
M steht für ein Alkalimetall-, Erdalkalimetall-, Ammonium-, oder Phosphoniumion.

R²⁵ und R²⁶ können gleich oder unterschiedlich sein und jeweils für H, substituierte oder unsubstituierte, aliphatische oder aromatische Kohlenwasserstoffreste mit 1 bis 25 Kohlenstoffatomen, mit gleicher oder unterschiedlicher Bedeutung stehen.

Beispiele für Q sind bivalente Kohlenwasserstoffreste, die aliphatisch, alicyclisch, aliphatischalicyclisch, heterocyclisch, aliphatisch-heterocylisch, aromatisch, aromatisch-aromatisch oder aliphatisch-aromatisch sein können. Gegebenenfalls vorhandene Ringsysteme können ihrerseits mit den oben genannten Kohlenwasserstoffresten substituiert sein. In offenkettigen Strukturelementen können eine oder mehrere Methylengruppen durch Sauerstoff und/oder Schwefel und/oder NR¹ und/oder NH und/oder eine oder mehrere CH-Gruppen durch Stickstoff ersetzt sein.

Bevorzugt steht Q für bivalente Reste, die aromatische Gruppen enthalten. Q kann beispielsweise ein Phenylenrest, Naphthylenrest, ein zweiwertiger Bisarylenrest oder ein bivalenter Rest eines Diphenylethers sein. Weiterhin kann Q die allgemeine Struktur -Ar-V-Arhaben. Darin bedeutet Ar einen mono- oder oligocyclischen bivalenten aromatischen Rest. V steht entweder für eine direkte Bindung oder für eine gegebenenfalls substituierte Methylengruppe -CR²⁷R²⁸-, wobei R²⁷ und R²⁸ für Wasserstoff und/oder aliphatische und/oder aromatische Reste mit 1 bis 25 Kohlenstoffatomen stehen, die darüber hinaus Heteroatome enthalten können. Weiterhin können die Reste R²⁷ und R²⁸ zu einem oder mehreren Ringen verknüpft sein, d. h. eine kovalente Bindung aufweisen.

Von den Bisphosphiten nach den allgemeinen Formeln **I, II, III, IV, V, VI** und **VII** sind diejenigen besonders bevorzugt, bei denen der Rest Q für einen Kohlenwasserstoffrest (Bisarylenrest) nach der allgemeinen Formel **VIII** steht 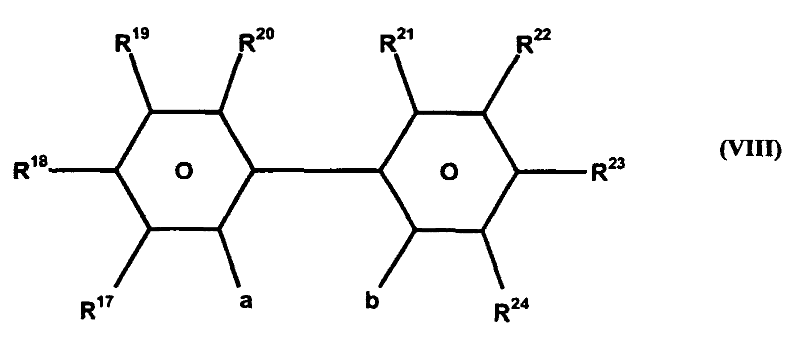 mit
R¹⁷, R¹⁸, R¹⁹, R²⁰, R²¹, R²², R²³ , R²⁴ = H, aliphatischer, alicyclischer, aliphatisch-alicyclischer, heterocyclischer, aliphatisch-heterocyclischer, aromatisch-aromatischer, aromatischer, aliphatisch-aromatischer Kohlenwasserstoffrest mit 1 bis 50 Kohlenstoffatomen, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, wobei R¹⁷ bis R²⁴ eine gleiche oder unterschiedliche Bedeutung besitzen und kovalent miteinander verknüpft sein können,
R²⁵, R²⁶ = H, substituierter oder unsubstituierter, aliphatischer oder aromatischer Kohlenwasserstoffrest mit 1 bis 25 Kohlenstoffatomen,
M = Alkalimetall-, Erdalkalimetall-, Ammonium-, Phosphoniumion,
wobei die Positionen a und b als Anknüpfpunkte dieses Substituenten im Strukturelement O-Q-O in den Verbindungen der Formeln **I** bis **VII** stehen.

Die folgende Reaktionssequenz soll das erfindungsgemäße Verfahren am Beispiel der Verbindung **VII** verdeutlichen, 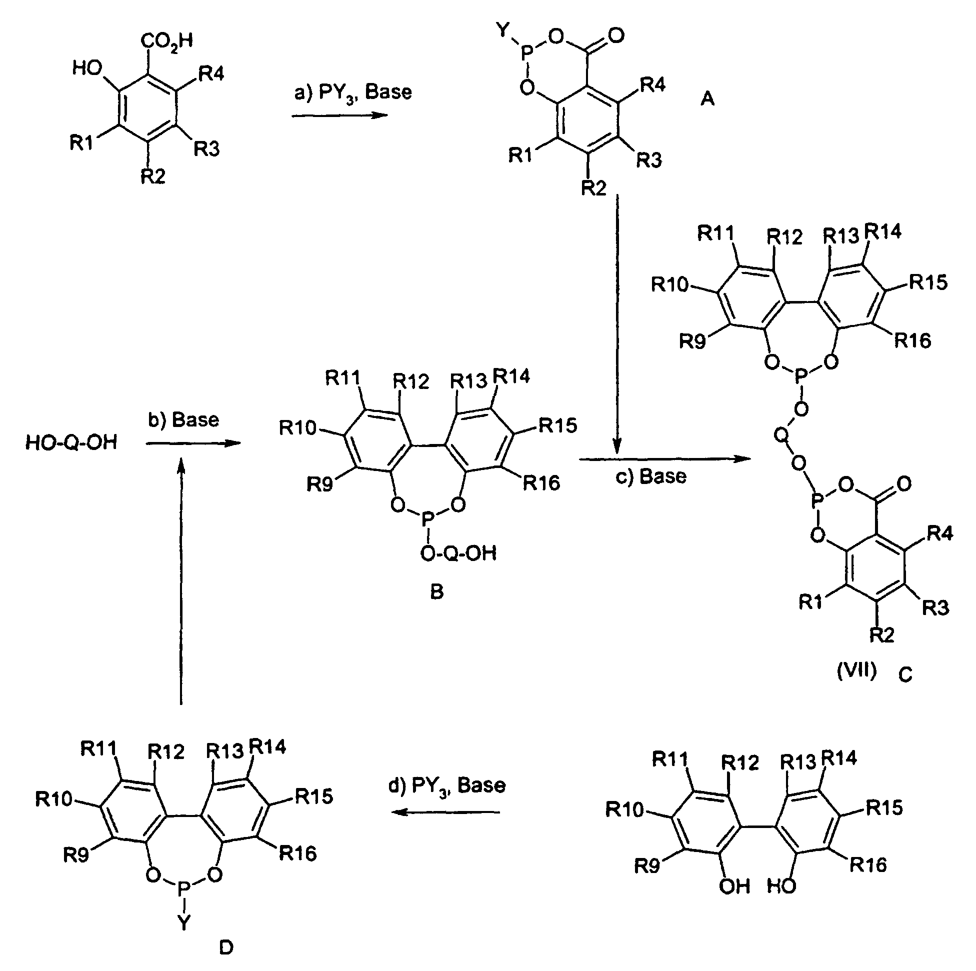 wobei R¹ bis R⁴ und R⁹ bis R¹⁶ die obengenannten Bedeutungen besitzen, PY₃ Phosphortrichlorid, Phosphortribromid oder Phosphortriiodid sein kann und mit Basen ein tertiäres Amin wie Triethylamin gemeint ist.

In einer besonderen Ausführungsform der Erfindung besitzen W und X eine kovalente Verknüpfung und das in Reaktionsschritt c) eingesetzte entsprechende Edukt gemäß Reaktionsschritt d) wird mit einem aprotischen und unpolaren Lösungsmittel gemäß aus folgendem Schema d) hergestellt.

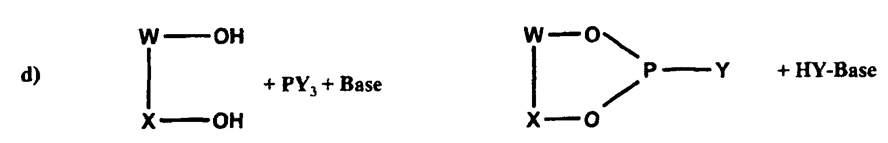

Alternativ zu dieser Route ist es möglich, dass zunächst das Zwischenprodukt **A** mit dem Diol HO-Q-OH reagiert und anschließend das Zwischenprodukt **B** eingebracht wird.

Die bei dem erfindungsgemäßen Verfahren eingesetzten Lösemittel sind selbstverständlich gegenüber den Reaktanden inert. Sie müssen so ausgewählt werden, dass sie zum einen die Reaktanden ausreichend gut lösen und zum anderen das entstehende Halogenwasserstoff-Produkt nicht lösen, so dass dieses Nebenprodukt während der Reaktion ausfällt. Diese Anforderungen werden von aprotischen und unpolaren Lösemittel wie Toluol erfüllt.

Die eingesetzten Lösemittel müssen weitestgehend wasser- und sauerstofffrei sein, dabei werden Lösemittel mit einem Wassergehalt von 0 - 500 ppm bevorzugt, besonders bevorzugt von 0 - 250 ppm. Der Wassergehalt kann beispielsweise durch das Verfahren nach Karl Fischer bestimmt werden.

Die Trocknung des Lösemittel kann durch Destillation des Lösemittels über ein geeignetes Trockenmittel oder durch Durchströmen des Lösemittels durch eine beispielsweise mit Molekularsieb 4 Å gefüllte Kartusche oder Säule geschehen.

Die Verfahrensschritte a), b), c) und d) laufen vorzugsweise bei Temperaturen von -80 °C bis 150 °C ab; in den meisten Fällen hat es sich bewährt, bei Temperaturen von -20 °C bis 110 °C, besonders bevorzugt bei 0°C bis 80 °C, zu arbeiten.

Das Halogenwasserstoff-Base-Adukt wird aus dem Reaktionsgemisch durch Filtration nach mindestens einem, bevorzugt nach jedem, der Reaktionsschritte a), b), c) oder d) entfernt. Dabei werden feste Bestandteile aus der Lösung beim Durchströmen einer porösen Schicht, dem Filtermittel, das für die Lösung durchlässig ist und den Feststoff zurückhält. Methoden der Filtration sind in C. Alt, Filtration, Ullmanns Enzyklopädie der technischen Chemie, **4**. Aufl., Verlag Chemie, Weinheim, 1972, Bd.B2, Kapitel 9 und 10 zusammengefasst.

Zur Überprüfung der Verfahrensschritte a), b), c) und d) kommen allgemeine Analytikmethoden in Frage, wie Massenspektroskopie (MS), mit Massenspektroskopie-gekoppelte oder ungekoppelte Gaschromatographie (GC/MS oder GC), mit Massenspektroskopie-gekoppelte oder ungekoppelte Flüssigchromatographie (LC/MS oder MS) oder Kernresonanzspektroskopie (NMR).

Die Verfahrensschritte a), b), c) und d) werden unter Schutzgas, wie Stickstoff oder Argon aufgrund der Oxidationsempfindlichkeiten der Reaktanden durchgeführt.

Die Verfahrensschritte d) und b) können im Eintopf-Verfahren nacheinander ohne Unterbrechung durchgeführt werden, so dass die Anzahl der Verfahrensschritte minimiert werden kann.

### Beispiele

Die nachfolgenden Beispiele wurde mit Hilfe der Standard-Schlenk-Technik durchgeführt, obgleich die Synthese auch im kg-Maßstab möglich ist.

### Beispiel 1

### Herstellung von Verbindung 1

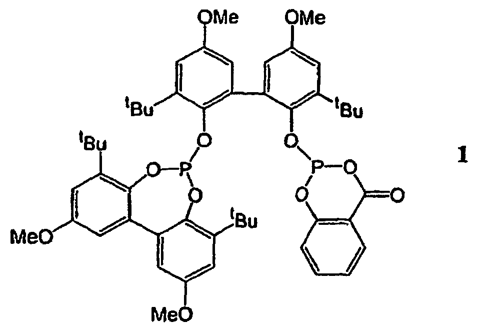

### Verfahrensschritt a)

In einem 500 ml Schlenkrohr werden 23,4 g (0,17 mol) Salicylsäure mit 170 ml Toluol versetzt. In einem 500 ml Schlenkrohr gibt man nacheinander unter Rühren 50 ml Toluol, 71,0 ml (51,6 g; 0,51 mol) Triethylamin und 14,8 ml (23,3 g; 0,17 mol) Phosphortrichlorid hinzu. Diese Lösung wird unter Rühren bei 0 bis 4 °C innerhalb von 40 min tropfenweise zu der Salicylsäure-Toluol-Mischung gegeben. Nach vollendeter Zugabe wird innerhalb von 2 h auf Raumtemperatur erwärmt und anschließend weitere 2 h bei Raumtemperatur gerührt. Dabei fällt das entstehende Triethylammoniumchlorid als weißer Feststoff aus, dieser über eine Fritte abgetrennt wird. Das Filtrat wird per GC/MS analysiert und bis zur weiteren Umsetzung beim Verfahrensschritt c) aufbewahrt.

### Verfahrensschritt d)

35,8 g (0,1 mol) 3,3'-Tertiärbutyl-2,2'-dihydroxy-5,5'-dimethoxybiphenyl werden mit 180 ml Toluol und 46 ml (= 33,4 g; 0,33 mol) Triethylamin versetzt und unter Rühren gelöst. Diese Lösung wird unter Rühren tropfenweise innerhalb von 1 h 30 min bei einer Temperatur von 0 bis 4 °C zu einer Lösung von 8,77 ml (= 13,8 g; 0,1 mol) Phosphortrichlorid in 80 ml Toluol gegeben. Nach vollendeter Zugabe wird innerhalb von 2 h auf Raumtemperatur erwärmt und anschließend weitere 2 h bei Raumtemperatur gerührt. Dabei fällt das entstehende Triethylammoniumchlorid als weißer Feststoff aus. Dieser wird mit Hilfe einer Fritte abgetrennt, das Filtrat wird per GC/MS analysiert und bis zur weiteren Umsetzung beim Verfahrensschritt b) aufbewahrt.

### Verfahrensschritt b)

In einem 1 l Schlenkrohr werden 35,8 g (0,1 mol) 3,3'-Tertiärbutyl-2,2'-dihydroxy-5,5'-dimethoxybiphenyl in 300 ml Toluol und 13,9 ml (= 10,12 g; 0,1 mol) Triethylamin unter Rühren gelöst. Zu dieser Lösung wird die im Verfahrensschritt b) hergestellte, das Zwischenprodukt D enthaltende Lösung bei Raumtemperatur innerhalb von 2 h tropfenweise zugegeben. Nach vollendeter Zugabe werden noch weitere 30 min bei Raumtemperatur gerührt, wobei Triethylammoniumchlorid als weißer Feststoff ausfällt. Zur Prüfung auf vollständigen Umsatz wird die Lösung der Reaktionsmischung mittels LC/MS untersucht. Haben sich die Ausgangsverbindungen noch nicht vollständig umgesetzt, wird das Reaktionsgemisch für 2 h auf 80 °C erhitzt. Nach Abkühlung auf Raumtemperatur wird das ausgefallene Triethylammoniumchlorid über eine Fritte abfiltriert und das Filtrat zur weiteren Verarbeitung im Verfahrensschritt c) aufbewahrt.

### Verfahrensschritt c)

Zu dem Filtrat aus dem Verfahrensschritt b), das das Zwischenprodukt **B** enthält, werden 15,9 ml (= 11,57 g; 0,11 mol) Triethylamin gegeben. Zu dieser Lösung wird bei 0 °C innerhalb von 2,5 h tropfenweise das Filtrat aus dem Verfahrensschritt a), das das Zwischenprodukt A enthält, zugegeben. Anschließend wird das Reaktionsgemisch auf Raumtemperatur erwärmt und noch weitere 2 h bei Raumtemperatur gerührt. Zur Aufarbeitung wird das ausgefallene Triethylammoniurnehlorid über eine Fritte abfiltriert. Nachdem das Lösemittel des Filtrats im Ölpumpenvakuum abdestilliert ist, wird der Rückstand mit 400 ml Acetonitril aufgeschlämmt, das Produkt über eine Fritte abfiltriert, der Rückstand zweimal mit 50 ml Acetonitril gewaschen und schließlich im Ölpumpenvakuum getrocknet.

| | |
|---|---|
| Gesamtausbeute | 40 - 60 % (bezogen auf die Biphenyl-Verbindung) |
| Reinheit (³¹P- NMR) | > 99 % |
| ³¹P-NMR (CD₂Cl₂) | δ 119.2 (m); 119.8 (m); 139.5 (m); 140.1 (m); |
| ¹H-NMR (CD₂Cl₂) | 1.02..1.26 (36 H); 3.67..3.74 (12 H); 6.43..7.99 (12 H); |
| FAB-MS | m/e 911 (100%, M+), 744 (18%), 387 (13%). |

### Beispiel 2

### Verfahrensschritte a) und c) wie Beispiel 1.

### Verfahrensschritt d) und b):

In einen 1 l Schlenkrohr werden 71,6 g (0,2 mol) 3,3'-Tertiärbutyl-2,2'-dihydroxy-5,5'-dimethoxybisphenol in 450 ml Toluol und 59,9 ml (0,43 mol) Triethylamin unter Rühren gelöst. Die Hälfte dieser Lösung wird unter Rühren tropfenweise innerhalb von 1 h 30 min bei -20 °C zu einer Lösung von 8,77 ml (0,1 mol) Phosphortrichlorid in 80 ml Toluol gegeben. Nach vollendeter Zugabe wird innerhalb von 2 h auf 0 - 4 °C erwärmt und weiter 2 h gerührt. Zu dieser Lösung wird innerhalb von 1 h 30 min bei 0 - 4 °C die 2. Hälfte der Bisphenyl/Triethylamin-Lösung zugegeben. Die Reaktionsmischung wird auf Raumtemperatur erwärmt und weitere 2 h gerührt. Zur Prüfung auf vollständigen Umsatz wird die Lösung der Reaktionsmischung mittels LC/MS untersucht. Haben sich die Ausgangsverbindungen noch nicht vollständig umgesetzt, wird das Reaktionsgemisch für 2 h auf 80 °C erhitzt. Nach Abkühlung auf Raumtemperatur wird das ausgefallene Triethylammoniumchlorid über eine Fritte abfiltriert und das Filtrat zur weiteren Verarbeitung im Verfahrensschritt d) aufbewahrt.

## Patentansprüche

1. Verfahren zur Herstellung von Bisphosphiten der Formel **I** 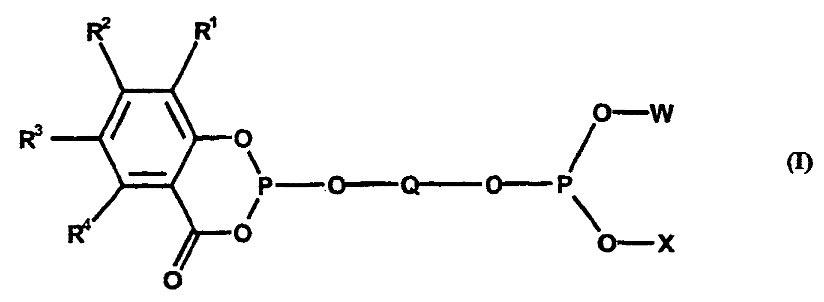 mit R¹, R², R³, R⁴ = H, aliphatischer, alicyclischer, aliphatisch-alicyclischer, heterocyclischer, aliphatisch-heterocyclischer, aromatischer, aromatisch-aromatischer, aliphatisch-aromatischer Kohlenwasserstoffrest mit 1 bis 50 Kohlenstoffatomen, F, Cl, Br, I, -CF₃, -OR⁷, -COR⁷, -CO₂R⁷, -CO₂M, -SR⁷, -SO₂R⁷, -SOR⁷, -SO₃R⁷, -SO₃M, -SO₂NR⁷R⁸, NR⁷R⁸, N=CR⁷R⁸, NH₂, wobei R¹ bis R⁴ eine gleiche oder unterschiedliche Bedeutung besitzen und kovalent miteinander verknüpft sein können,
R⁷, R⁸ = H, substituierter oder unsubstituierter, aliphatischer oder aromatischer Kohlenwasserstoffrest mit 1 bis 25 Kohlenstoffatomen, mit gleicher oder unterschiedlicher Bedeutung,
M = Alkalimetall-, Erdalkalimetall-, Ammonium-, Phosphoniumion
Q = zweiwertiger aliphatischer, alicyclischer, aliphatisch-alicyclischer, heterocyclischer, aliphatisch-heterocyclischer, aromatischer, aliphatisch-aromatischer Kohlenwasserstoffrest mit 1 bis 50 Kohlenstoffatomen,
Z, Y = Cl, Br, I
W, X = aliphatische, alicyclische, aliphatisch-alicyclische, heterocyclische, aliphatischheterocyclische, aromatische, aromatisch-aromatische, aliphatisch-aromatische Kohlenwasserstoffreste mit 1 bis 50 Kohlenstoffatomen, die gleich oder unterschiedlich oder kovalent miteinander verknüpft sein können, wobei die Reaktionssequenz 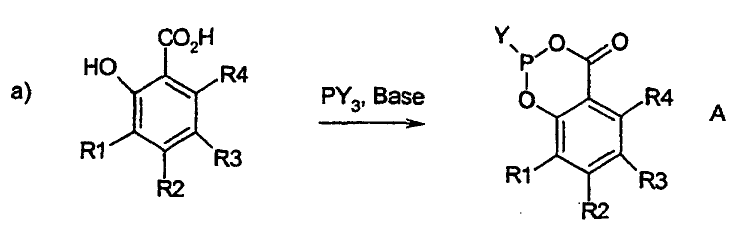 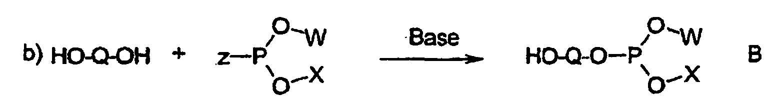 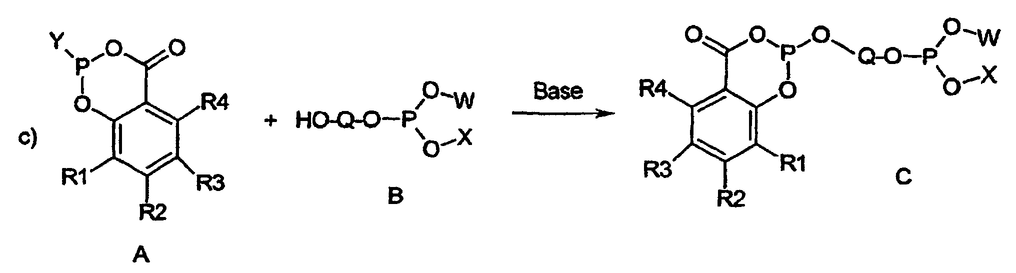 durchgeführt wird,
**dadurch gekennzeichnet,**
**dass** die Reaktionsschritte a), b) und c) in aprotischen und unpolaren Lösungsmitteln durchgeführt werden, wobei das Addukt Base • HY bzw. Base • HZ nach mindestens einem der Reaktionsschritte a), b) oder c) abfiltriert wird und erst das Endprodukt isoliert und gereinigt wird.

2. Verfahren nach Anspruch 1,
**dadurch gekennzeichnet,**
**dass** als Base tertiäre Amine eingesetzt werden.

3. Verfahren nach Anspruch 1 oder 2,
**dadurch gekennzeichnet,**
**dass** als aprotisches und unpolares Lösungsmittel Benzol, Toluol, Ethylbenzol, Cyclohexan eingesetzt werden.

4. Verfahren nach einem der Ansprüche 1 bis 3,
**dadurch gekennzeichnet,**
**dass** W und X aliphatische, alicyclische, aliphatisch-alicyclische, heterocyclische, aliphatisch-heterocyclische, aromatische, aromatisch-aromatische, aliphatisch-aromatische Kohlenwasserstoffreste mit 1 bis 50 Kohlenstoffatomen, mit einer kovalenten Verknüpfung gemäß Formel V 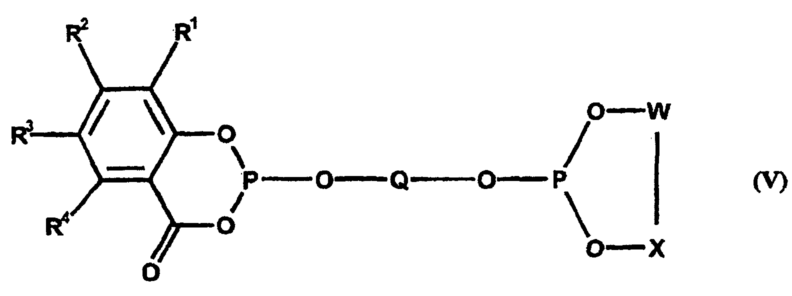 sind und R¹, R², R³, R⁴ und Q die in Anspruch 1 genannten Bedeutungen und Maßgaben besitzen.

5. Verfahren nach einem der Ansprüche 1 bis 3,
**dadurch gekennzeichnet,**
**dass** W und X aromatische Kohlenwasserstoffreste mit 1 bis 50 Kohlenstoffatomen mit kovalenten Verknüpfungen gemäß Formel VI 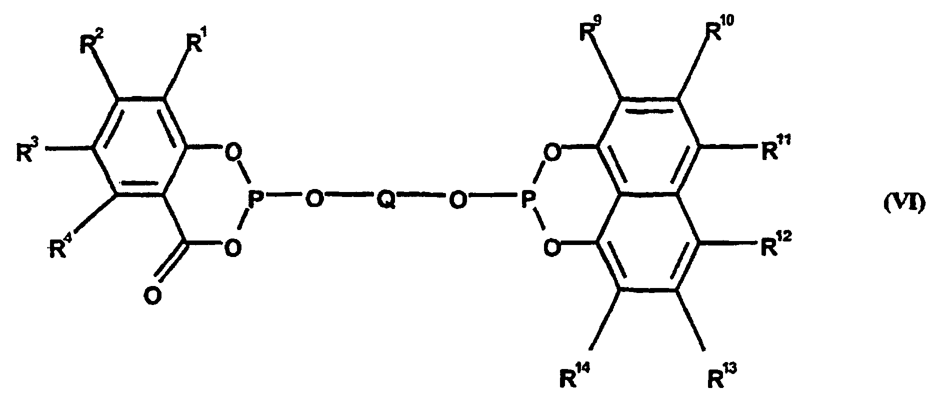 sind,
mit R⁹, R¹⁰, R¹¹, R¹², R¹³, R¹⁴ = H, aliphatischer, alicyclischer, aliphatisch-alicyclischer, heterocyclischer, aliphatisch-heterocyclischer, aromatisch-aromatischer, aromatischer, aliphatisch-aromatischer Kohlenwasserstoffrest mit 1 bis 50 Kohlenstoffatomen, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, wobei R⁹ bis R¹⁴ eine gleiche oder unterschiedliche Bedeutung besitzen und kovalent miteinander verknüpft sein können,
R²⁵, R²⁶ = H, substituierter oder unsubstituierter, aliphatischer oder aromatischer Kohlenwasserstoffrest mit 1 bis 25 Kohlenstoffatomen, mit gleicher oder unterschiedlicher Bedeutung,
M = Alkalimetall-, Erdalkalimetall-, Ammonium-, Phosphoniumion und
R¹, R², R³, R⁴ und Q die in Anspruch 1 genannten Bedeutungen und Maßgaben besitzen.

6. Verfahren nach einem der Ansprüche 1 bis 3,
**dadurch gekennzeichnet,**
**dass** W und X aromatische Kohlenwasserstoffreste mit 1 bis 50 Kohlenstoffatomen mit einer kovalenten Verknüpfung gemäß Formel **VII** 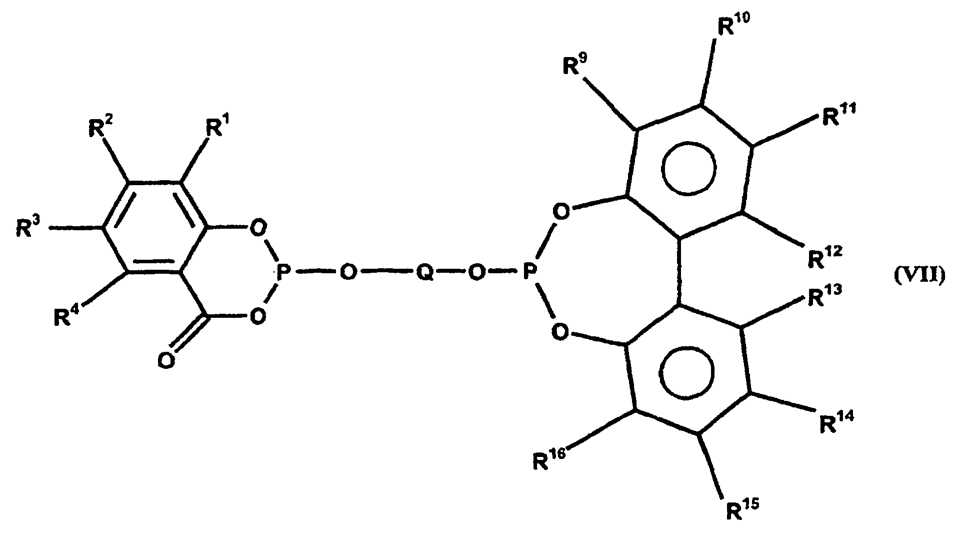 sind,
mit R⁹, R¹⁰, R¹¹, R¹², R¹³, R¹⁴, R¹⁵, R¹⁶ = H, aliphatischer, alicyclischer, aliphatisch-alicyclischer, heterocyclischer, aliphatisch-heterocyclischer, aromatischer, aromatisch-aromatischer, aliphatisch-aromatischer Kohlenwasserstoffrest mit 1 bis 50 Kohlenstoffatomen, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, wobei R⁹ bis R¹⁶ eine gleiche oder unterschiedliche Bedeutung besitzen und kovalent miteinander verknüpft sein können,
R²⁵, R²⁶ = H, substituierter oder unsubstituierter, aliphatischer oder aromatischer Kohlenwasserstoffrest mit 1 bis 25 Kohlenstoffatomen, mit gleicher oder unterschiedlicher Bedeutung,
M = Alkalimetall-, Erdalkalimetall-, Ammonium-, Phosphoniumion und
R¹, R², R³, R⁴ und Q die in Anspruch 1 genannten Bedeutungen und Maßgaben besitzen.

7. Verfahren nach einem der Ansprüche 1 bis 6,
**dadurch gekennzeichnet,**
**dass** das Q ein Kohlenwasserstoffrest gemäß Formel VIII 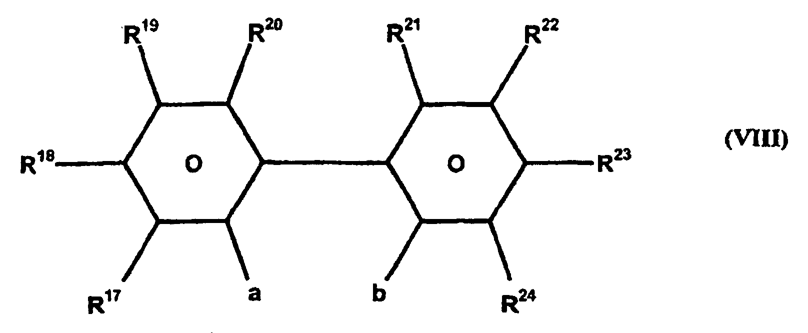 ist,
mit R¹⁷, R¹⁸, R¹⁹, R²⁰, R²¹, R²², R²³, R²⁴ = H, aliphatischer, alicyclischer, aliphatisch-alicyclischer, heterocyclischer, aliphatisch-heterocyclischer, aromatisch-aromatischer, aromatischer, aliphatisch-aromatischer Kohlenwasserstoffrest mit 1 bis 50 Kohlenstoffatomen, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, wobei R¹⁷ bis R²⁴ eine gleiche oder unterschiedliche Bedeutung besitzen und kovalent miteinander verknüpft sein können,
R²⁵, R²⁶ = H, substituierter oder unsubstituierter, aliphatischer oder aromatischer Kohlenwasserstoffrest mit 1 bis 25 Kohlenstoffatomen,
M = Alkalimetall-, Erdalkalimetall-, Ammonium-, Phosphoniumion
wobei die Positionen a und b als Anknüpfpunkte dienen.

8. Verfahren nach einem der Ansprüche 1 bis 7,
**dadurch gekennzeichnet**,
X und W eine kovalente Verknüpfung aufweisen und das in Reaktionsschritt c) eingesetzte entsprechende Edukt gemäß Reaktionsschritt d) in einem aprotischen und unpolaren Lösungsmittel hergestellt wird

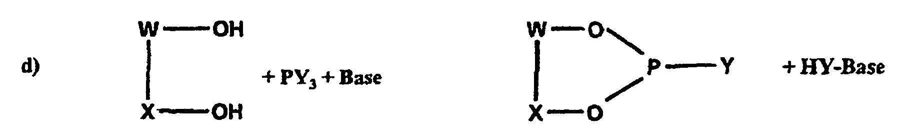

## Claims

1. A process for preparing bisphosphites of the formula I 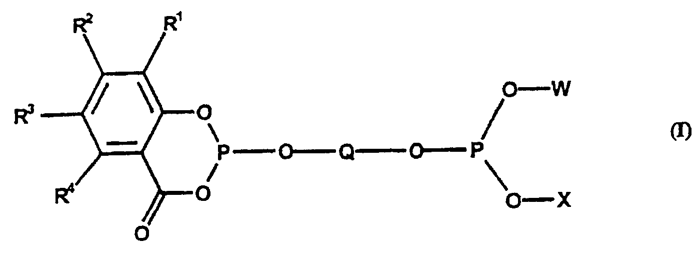 where R¹, R², R³, and R⁴ are each H, an aliphatic, alicyclic, aliphatic-alicyclic, heterocyclic,aliphatic-heterocyclic, aromatic, aromatic-aromatic or aliphatic-aromatic hydrocarbon radical having from 1 to 50 carbon atoms, F, Cl, Br, I, -CF₃, -OR⁷, -COR⁷, -CO₂R⁷, -CO₂M, -SR⁷, -SO₂R⁷, -SOR⁷, -SO₃R⁷, -SO₃M, -SO₂NR⁷R⁸, NR⁷R⁸, N=CR⁷R⁸ or NH₂, where R¹ to R⁴ are identical or different and may be covalently linked to one another,
R⁷ and R⁸ are each H or a substituted or unsubstituted, aliphatic or aromatic hydrocarbon radical having from 1 to 25 carbon atoms and are identical or different,
M is an alkali metal ion, alkaline earth metal ion, ammonium ion or phosphonium ion,
Q is a divalent aliphatic, alicyclic, aliphatic-alicyclic, heterocyclic, aliphatic-heterocyclic, aromatic or aliphatic-aromatic hydrocarbon radical having from 1 to 50 carbon atoms,
Z and Y are each Cl, Br or I,
W and X are each an aliphatic, alicyclic, aliphatic-alicyclic, heterocylic, aliphatic-heterocyclic, aromatic, aromatic-aromatic or aliphatic-aromatic hydrocarbon radical having from 1 to 50 carbon atoms and may be identical or different or be covalently linked to one another, which comprises carrying out the reaction sequence 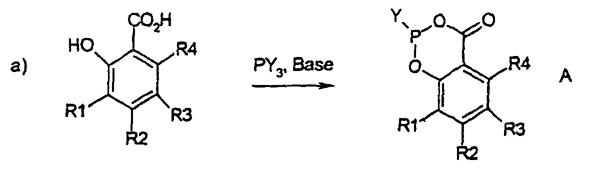 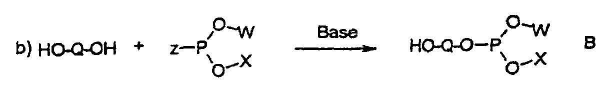 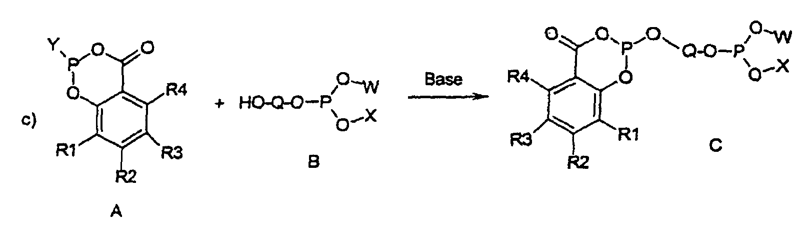 **characterized in that** the reaction steps a), b) and c) are carried out in aprotic and nonpolar solvents, the adduct base · HY or base · HZ being filtered off after at least one of the reaction steps a), b) or c) and only the end product being isolated and purified.

2. A process according to claim 1, **characterized in that** a tertiary amine is used as base.

3. A process according to claim 1 or 2, **characterized in that** benzene, toluene, ethylbenzene or cyclohexane is used as aprotic and nonpolar solvent.

4. A process according to any one of claims 1 to 3, **characterized in that** W and X are each an aliphatic, alicyclic, aliphatic-alicyclic, heterocyclic, aliphatic-heterocyclic, aromatic, aromatic-aromatic or aliphatic-aromatic hydrocarbon radical having from 1 to 50 carbon atoms and are covalently linked as in the formula V 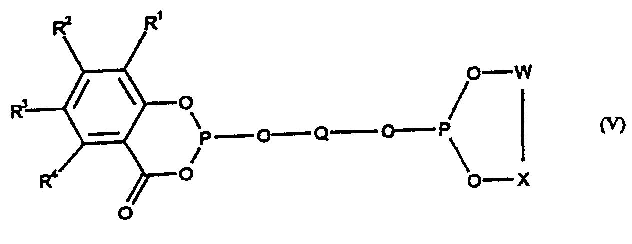 where R¹, R², R³, R⁴ and Q are as defined in claim 1 and subject to the provisos therein.

5. A process according to any one of claims 1 to 3, **characterized in that** W and X are each an aromatic hydrocarbon radical having from 1 to 50 carbon atoms and are covalently linked as shown in the formula VI 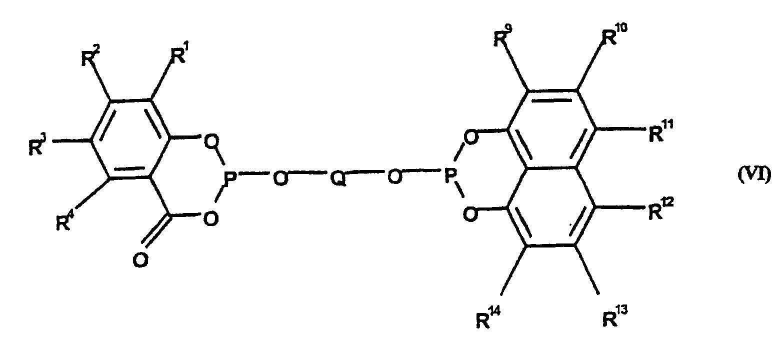 where R⁹, R¹⁰, R¹¹, R¹², R¹³ and R¹⁴ are each H, an aliphatic, alicyclic, aliphatic-alicyclic, heterocyclic, aliphatic-heterocyclic, aromatic-aromatic, aromatic or aliphatic-aromatic hydrocarbon radical having from 1 to 50 carbon atoms, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶ or NH₂, where R⁹ to R¹⁴ are identical or different and may be covalently linked to one another,
R²⁵ and R²⁶ are each H or a substituted or unsubstituted, aliphatic or aromatic hydrocarbon radical having from 1 to 25 carbon atoms and are identical or different,
M is an alkali metal ion, alkaline earth metal ion, ammonium ion or phosphonium ion, and
R¹, R², R³, R⁴ and Q are as defined in claim 1 and subject to the provisos therein.

6. A process according to any of claims 1 to 3, **characterized in that** W and X are each an aromatic hydrocarbon radical having from 1 to 50 carbon atoms and are covalently linked as shown in the formula VII 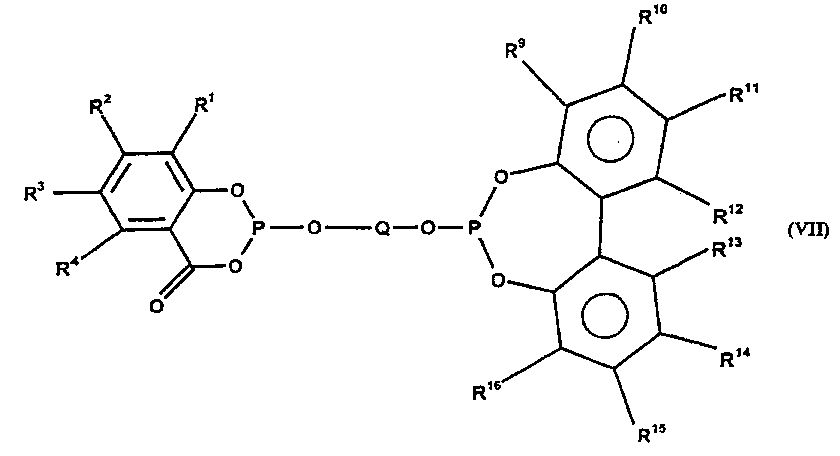 where R⁹, R¹⁰, R¹¹, R¹², R¹³, R¹⁴, R¹⁵ and R¹⁶ are each H, an aliphatic, alicyclic, aliphatic-alicyclic, heterocyclic, aliphatic-heterocyclic, aromatic-aromatic, aromatic or aliphatic-aromatic hydrocarbon radical having from 1 to 50 carbon atoms, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶ or NH₂, where R⁹ to R¹⁶ are identical or different and may be covalently linked to one another,
R²⁵ and R²⁶ are each H or a substituted or unsubstituted, aliphatic or aromatic hydrocarbon radical having from 1 to 25 carbon atoms and may be identical or different,
M is an alkali metal ion, alkaline earth metal ion, ammonium ion or phosphonium ion, and
R¹, R², R³, R⁴ and Q are as defined in claim 1 and subject to the provisos therein.

7. A process according to any one of claims 1 to 6, **characterized in that** Q is a hydrocarbon radical of the formula VIII 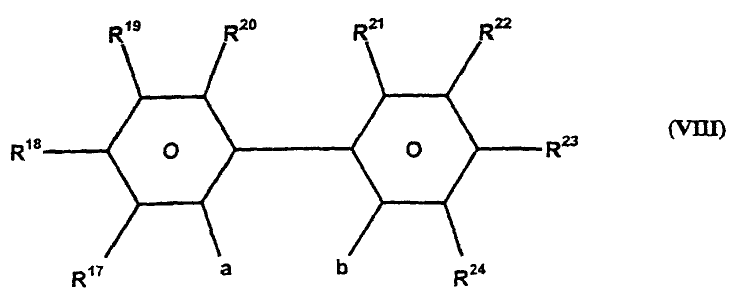 where R¹⁷, R¹⁸, R¹⁹, R²⁰, R²¹, R²², R²³ and R²⁴ are each H, an aliphatic, alicyclic, aliphatic-alicyclic, heterocyclic, aliphatic-heterocyclic, aromatic-aromatic, aromatic or aliphatic-aromatic hydrocarbon radical having from 1 to 50 carbon atoms, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶ or NH₂, where R¹⁷ to R²⁴ are identical or different and may be covalently linked to one another,
R²⁵ and R²⁶ are each H or a substituted or unsubstituted, aliphatic or aromatic hydrocarbon radical having from 1 to 25 carbon atoms,
M is an alkali metal ion, alkaline earth metal ion, ammonium ion or phosphonium ion,
with the positions a and b serving as linkage points.

8. A process according to any one of claims 1 to 7, **characterized in that** X and W are covalently linked and the corresponding starting material used in reaction step c) is prepared according to reaction step d) in an aprotic and nonpolar solvent.

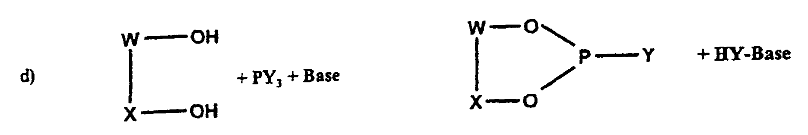

## Revendications

1. Procédé de production de biphosphites de formule I : 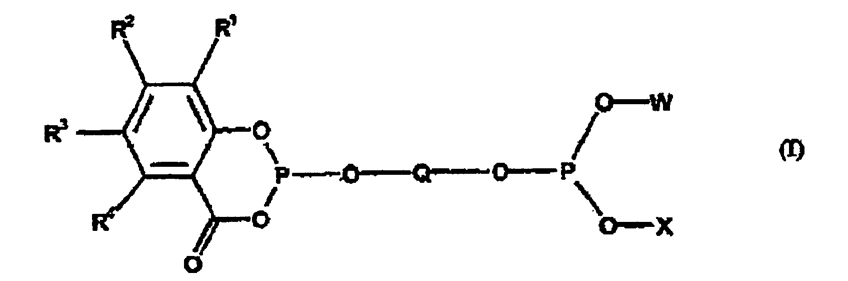 dans laquelle R¹, R², R³, R⁴ sont l'hydrogène, un radical hydrocarboné aliphatique, alicyclique, aliphatique-alicyclique, hêtérocyclique, aliphatique-hétérocyclique, aromatique, aromatique-aromatique, aliphatique-aromatique ayant 1 à 50 atomes de carbone, F, Cl, Nr, I, -CF₃, -OR⁷, -COR⁷, -CO₂R⁷, -CO₂M, -SR⁷, -SO₂R⁷, -SOR⁷, -SO₃R⁷, -SO₃M, -SO₂NR⁷R⁸, NR⁷R⁸, N=CR⁷R⁸, NH₂, avec R¹ à R⁴ étant identiques ou différents et pouvant être reliés les uns aux autres de manière covalente,
R⁷, R⁸ sont l'hydrogène, un radical hydrocarboné aliphatique ou aromatique substitué ou non substitué ayant 1 à 25 atomes de carbone, identiques ou différents,
M est un ion métallique alcalin, métallique alcalino-terreux, ammonium ou phosphonium,
Q est un radical hydrocarboné aliphatique, alicyclique, aliphatique-alicyclique, hétérocyclique, aliphatique-hétérocyclique, aromatique, aliphatique-aromatique bivalent ayant 1 à 50 atomes de carbone,
Z, Y sont Cl, Br, I,
W, X sont des radicaux hydrocarbonés aliphatiques, alicycliques, aliphatiques-alicycliques, hétérocycliques, aliphatiques-hétérocycliques, aromatiques, aromatiques-aromatiques, aliphatiques-aromatiques ayant 1 à 50 atomes de carbone, qui peuvent être identiques ou différents ou reliés entre eux de manière covalente,
selon lequel on conduit la séquence réactionnelle suivante : 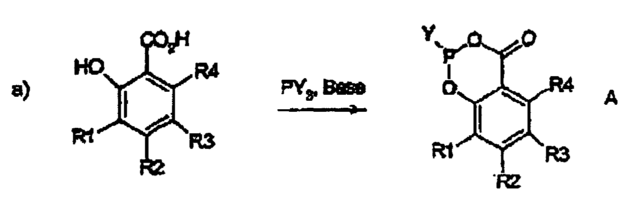 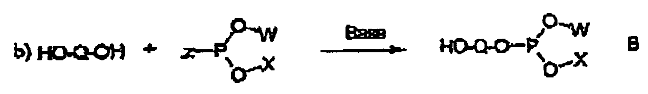 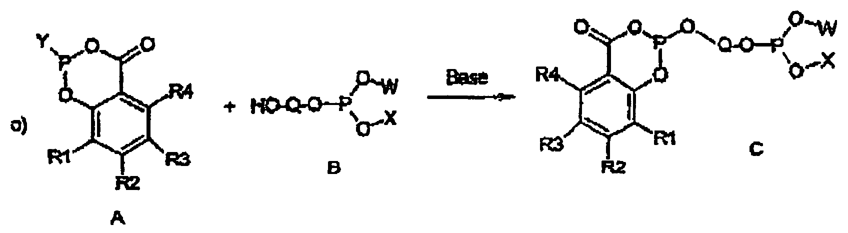 **caractérisé en ce que**
les étapes réactionnelles a), b) et c) sont réalisées dans des solvants aprotiques et apolaires, l'adduit base • HY ou base • HZ étant séparé par filtration après au moins l'une des étapes réactionnelles a), b) ou c) et le produit final est préalablement isolé et purifié.

2. Procédé selon la revendication 1,
**caractérisé en ce que**
comme base on met en oeuvre une amine tertiaire.

3. Procédé selon la revendication 1 ou 2,
**caractérisé en ce que**
comme solvant aprotique et apolaire, on met en oeuvre le benzène, le toluène, l'éthylbenzène, le cyclohexane.

4. Procédé selon l'une des revendications 1 à 3,
**caractérisé en ce que**
W et X sont des radicaux hydrocarbonés aliphatiques, alicycliques, aliphatiques-alicycliques, hétérocycliques, aliphatiques-hétérocycliques, aromatiques, aromatiques-aromatiques, aliphatiques-aromatiques ayant 1 à 50 atomes de carbone avec une liaison covalente selon la formule V : 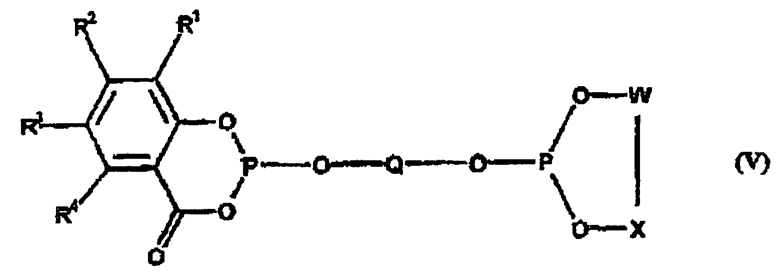 et R¹, R², R³, R⁴ et Q ont les significations et les restrictions selon la revendication 1.

5. Procédé selon l'une des revendications 1 à 3,
**caractérisé en ce que**
W et X sont des radicaux hydrocarbonés aromatiques ayant 1 à 50 atomes de carbone avec des liaisons covalentes selon la formule VI : 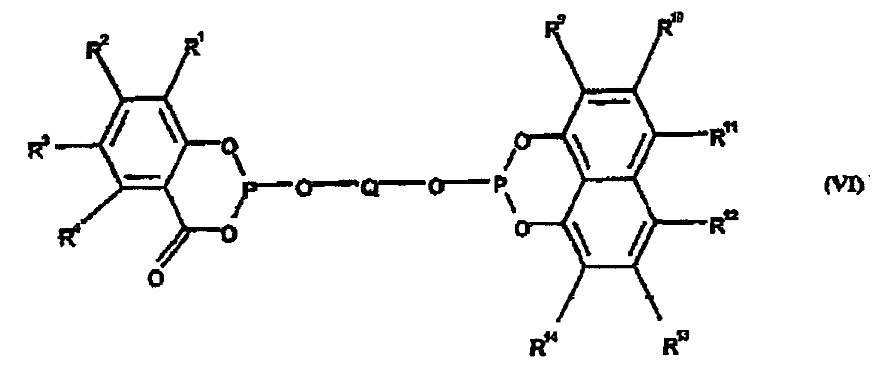 dans laquelle R⁹, R¹⁰, R¹¹, R¹², R¹³, R¹⁴ sont l'hydrogène, un radical hydrocarboné aliphatique, alicyclique, aliphatique-alicyclique, hétérocyclique, aliphatique-hétérocyclique, aromatique-aromatique, aromatique, aliphatique-aromatique ayant 1 à 50 atomes de carbone, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, avec R⁹ à R¹⁴ étant identiques ou différents et pouvant être reliés les uns aux autres de manière covalente,
R²⁵, R²⁶ sont l'hydrogène, un radical hydrocarboné aliphatique ou aromatique substitué ou non substitué ayant 1 à 25 atomes de carbone, identiques ou différents,
M est un ion métallique alcalin, métallique alcalino-terreux, ammonium, phosphonium et
R¹, R², R³, R⁴ et Q ont les significations et les restrictions selon la revendication 1.

6. Procédé selon l'une des revendications 1 à 3,
**caractérisé en ce que**
W et X sont des radicaux hydrocarbonés aromatiques ayant 1 à 50 atomes de carbone avec une liaison covalente selon la formule VII : 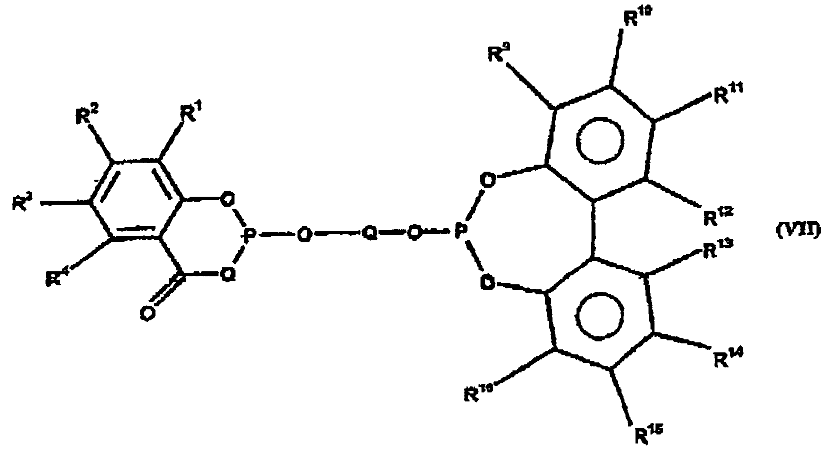 dans laquelle R⁹, R¹⁰, R¹¹, R¹², R¹³, R¹⁴, R¹⁵, R¹⁶ sont l'hydrogène, un radical hydrocarboné aliphatique, alicyclique, aliphatique-alicyclique, hétérocyclique, aliphatique-hétérocyclique, aromatique, aromatique-aromatique, aliphatique-aromatique ayant 1 à 50 atomes de carbone, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, avec R⁹ à R¹⁶ étant identiques ou différents et pouvant être reliés les uns aux autres de manière covalente,
R²⁵, R²⁶ sont l'hydrogène, un radical hydrocarboné aliphatique ou aromatique substitué ou non substitué ayant 1 à 25 atomes de carbone, identiques ou différents,
M est un ion métallique alcalin, métallique alcalino-terreux, ammonium, phosphonium et
R¹, R², R³, R⁴ et Q ont les significations et les restrictions selon la revendication 1.

7. Procédé selon l'une des revendications 1 à 6,
**caractérisé en ce que**
Q est un radical hydrocarboné selon la formule VIII : 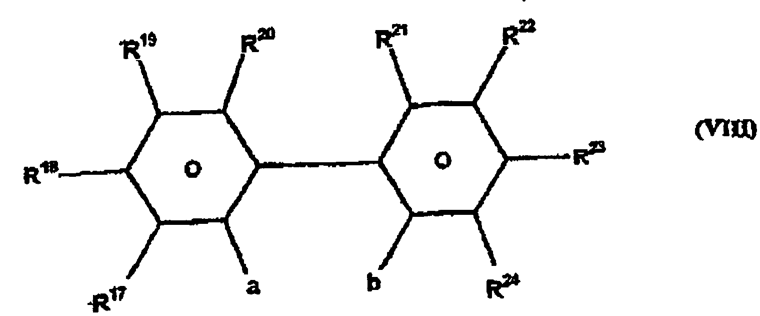 dans laquelle R¹⁷, R¹⁸, R¹⁹, R²⁰, R²¹, R²², R²³, R²⁴ sont l'hydrogène, un radical hydrocarboné aliphatique, alicyclique, aliphatique-alicyclique, hétérocyclique, aliphatique-hétérocyclique, aromatique-aromatique, aromatique, aliphatique-aromatique ayant 1 à 50 atomes de carbone, F, Cl, Br, I, -CF₃, -OR²⁵, -COR²⁵, -CO₂R²⁵, -CO₂M, -SR²⁵, -SO₂R²⁵, -SOR²⁵, -SO₃R²⁵, -SO₃M, -SO₂NR²⁵R²⁶, NR²⁵R²⁶, N=CR²⁵R²⁶, NH₂, avec R¹⁷ à R²⁴ étant identiques ou différents et pouvant être reliés les uns aux autres de manière covalente,
R²⁵, R²⁶ sont l'hydrogène, un radical hydrocarboné aliphatique ou aromatique substitué ou non substitué ayant 1 à 25 atomes de carbone,
M est un ion métallique alcalin, métallique alcalino-terreux, ammonium, phosphonium,
les positions a et b servant de points de liaison.

8. Procédé selon l'une des revendications 1 à 7,
**caractérisé en ce que**
X et W présentent une liaison covalente et l'éduit correspondant mis en oeuvre au cours de l'étape c) est préparé selon l'étape réactionnelle d) dans un solvant aprotique et apolaire :
